# EUROPEAN PATENT SPECIFICATION

(11) **EP 2 060 212 B1**
(45) Date of publication and mention of the grant of the patent: **04.08.2010**
(21) Application number: 07120779.9
(22) Date of filing: 15.11.2007
(51) Int. Cl.: A47J 37/04

(54) **Cooking device and method for cooking food**
Garvorrichtung und Verfahren zum Garen von Nahrungsmitteln
Dispositif de cuisson et procédé de cuisson des aliments

(43) Date of publication of application: 20.05.2009
(73) Proprietor: Tumble-Woc B.V., 2141 BR Vijfhuizen (NL)
(72) Inventor: Oosterling, Pieter, 4508KC, Waterlandkerkje (NL)
(74) Representative: Grubert, Andreas

(56) References cited:
- EP-A- 1 550 392
- WO-A-01/24673
- US-A1- 2004 247 762

## Description

The invention concerns a cooking device in accordance with the preamble of claim 1. Such a device is known from WO 0124673. The disadvantage of the known device is that the cooked food is not always dry and crisp after the heating cycle is finished. The continued generation of humidity inside the food particles as long as they are subjected to infrared radiation causes this effect as in the known device the infrared radiation stops together with the air circulation. This means that humidity that is creeping to the surface of the food particle at the moment the radiation and ventilation are stopped, is not conveyed away as vapour but remains on the surface of the food particle.

In order to overcome this disadvantage the cooking device is according to claim 1. The continued airflow dries the surface of the food particles after the infrared radiation has stopped. In this way, the food particles are crisp when taken out of the heating cavern.

In accordance with an embodiment, the cooking device is according to claim 2. By providing a separate heater for the air circulation system it is possible to maintain the flow of heated air while the infrared radiator is switched off. In addition, it is possible control the temperature of the circulating air independently from the use or intensity of the infrared radiation. This makes the cooking device more versatile.

In accordance with an embodiment, the cooking device is according to claim 3. By using the infrared radiator also for heating the circulating air, a more simple device is obtained. The shutter can be a simple mechanical shield.

In accordance with an embodiment, the cooking device is according to claim 4. The reduced infrared radiation prevents overheating of the infrared radiator and/or a too high temperature of the circulating air.

In accordance with an embodiment, the cooking device is according to claim 5. The air cooler makes it possible to remove the humidity generated by the food so that cooked food particles get a crisper surface.

In accordance with an embodiment, the cooking device is according to claim 6. Independent switching on or off of the air cooler creates a versatile device whereby heating programs can be made that are suitable for a variety food types.

In accordance with an embodiment, the cooking device is according to claim 7. The arc-shaped nozzle creates airflow through the food that is at the bottom of the heating cavern. As the food on the bottom is also subject to intense infrared radiation the increased air circulation at that location improves the removal of the vapour and other gasses escaping from the food particles.

The invention also concerns a device for automatically cooking prepared food in accordance with claim 8. In this device, prepared food is automatically cooked and made ready for distribution without any human intervention other than switching the device on and setting the program. The loading and unloading of the heating cavern with preset amounts is food is done automatically.

In accordance with an embodiment, the device for automatically cooking food is in accordance with claim 9. By using a horizontal belt for removing prepared food from the storage bin the food is not damaged or cut while separated into smaller portions.

In accordance with an embodiment, the device for automatically cooking food is in accordance with claim 10. In this way the heating cavern can be filled very fast so that its capacity increases.

In accordance with an embodiment, the device for automatically cooking food is in accordance with claim 11. In this way it is easy to heat smaller quantities, whereby the control means accurately knows the quantity and can adapt the heating program accordingly.

In accordance with an embodiment, the device for automatically cooking food is in accordance with claim 12. In this way, the drive of the heating cavern opens or closes the closable opening and few additional parts are required.

The invention also concerns a method for cooking food according to the preamble of claim 13. This method is known from the earlier mentioned WO 0124673 has the same disadvantage as discussed earlier.

According to the invention the method is according to claim 13. By using this method the heated food will be crisp and tasty.

Embodiments of the invention will now be described with reference to the accompanying drawings in which
Figure 1 shows a perspective view of a cooking device with a rotatable drum mounted on a mounting plate,
Figure 2 shows a part of a vertical section of the attachment of the rotatable drum to the mounting plate of the cooking device of figure 1,
Figure 3 shows a detail of the front view of the rotable drum,
Figure 4 shows a detail of the rotatable drum whereby its lid is in the open position,
Figure 5 shows a detail of the rotatable drum whereby its lid is in the closed position,
Figure 6 shows a front view of an air circulation system providing air circulation in the rotatable drum and mounted behind the mounting plate shown in figure 1,
Figure 7 shows a vertical section VII - VII of figure 6,
Figure 8 shows a top view of the air circulation system of figure 6,
Figure 9 shows a horizontal section IX - IX of figure 6,
Figure 10 shows e perspective view of a cooking device similar to the cooking device of figure 1 in an assembly that is suitable for automatically cooking French fries, and
Figure 11 shows a front view and partial section of the assembly of figure 10.

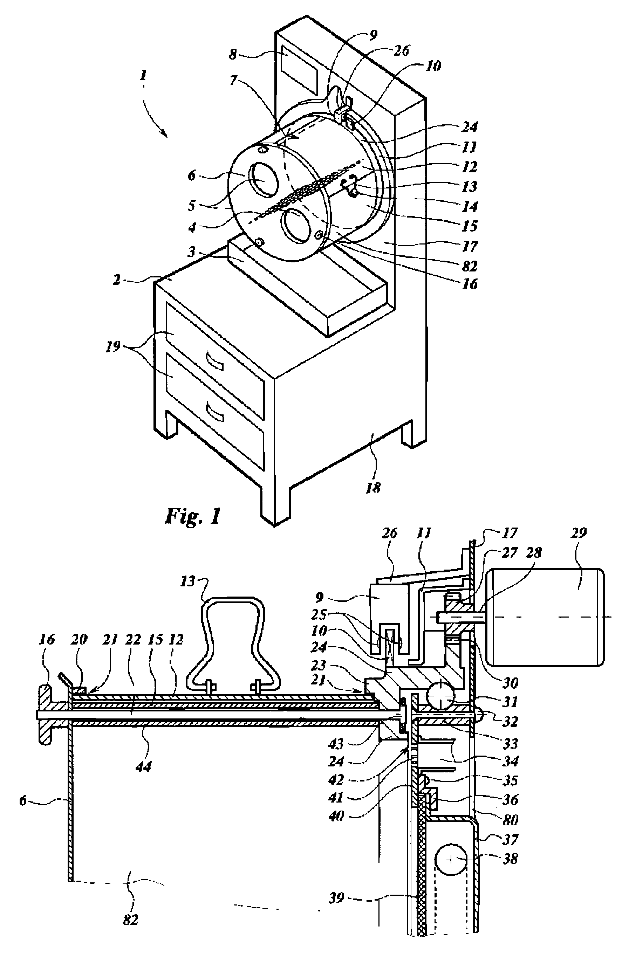

Figure 1 shows a cooking device 1 with a worktable 2 on top of a base 18 that has two storage drawers 19. The storage drawers 19 are designed to store food that can be heated in the cooking device 19 and preferably, the base 18 has a cooling installation so that the food in the storage drawers 19 can be cooled during storage. The cooking device 1 has at the back of the worktable a mounting plate 17 with a rotatable outer ring 24. A cylindrical drum 15, which has a diameter of approximately 0,400 meter or 16 inch, is mounted between the rotatable outer ring 24 and a front plate 6 which is fastened with three bolts 22 (see figure 2) and nuts 16 to the outer ring 24. The cylindrical drum 15 has an opening 7 that is slightly smaller than one third of its circumference. For closing the opening 7, a lid 12 can slide along the outer circumference of the cylindrical drum 15 and a resilient shackle 13 can be hooked around a pin 14 for keeping it closed.

The cylindrical drum 15, the front plate 6 and a back plate 40 (see figure 2) form a heating cavern 82 that rotates with the outer ring 24 around a rotation axis that is in this embodiment horizontal. In the heating cavern 82, a circulating flow of heated air and infrared radiation cook and bake the food. As the rotation axis of the heating cavern 82 is not vertical the rotatable heating cavern 82 heats food that rolls over the inner surfaces of the heating cavern 82 so that the food does not stick to the surfaces. In order to improve the rolling of the food a separation grid 4 divides the heating cavern 82 into two areas, the separation grid 4 is slotted between ridges (not shown) in the inside circumference of the cylindrical drum 15. The two areas can be filled and emptied through the opening 7 simultaneously. The front plate 6 has two windows 5 for reviewing the cooking process inside the heating cavern 82.

For filling the heating cavern 82 the opening 7 is rotated to the top position determined by a limit switch 9 with two detectors 25 (see figure 2) that cooperate with a cam 10. Emptying the heating cavern 82 is by rotating the opening 7 to the bottom position determined by the same limit switch 9 and a cam 10' that has a different dimension so that the two detectors 25 can distinguish the different rotative positions. After the operator slides the lid 12 open, the cooked food can fall in a receptacle 3.

On the mounting plate 17 a control panel 8 is mounted. This control panel 8 has the facilities for setting a heating program of the cooking device 1, for controlling the rotation of the cylindrical drum 15, the heating program and the filling and emptying of the heating cavern 82. In addition, there are warning lights that indicate malfunctioning of the cooking device 1 and signal lights for indicating required maintenance.

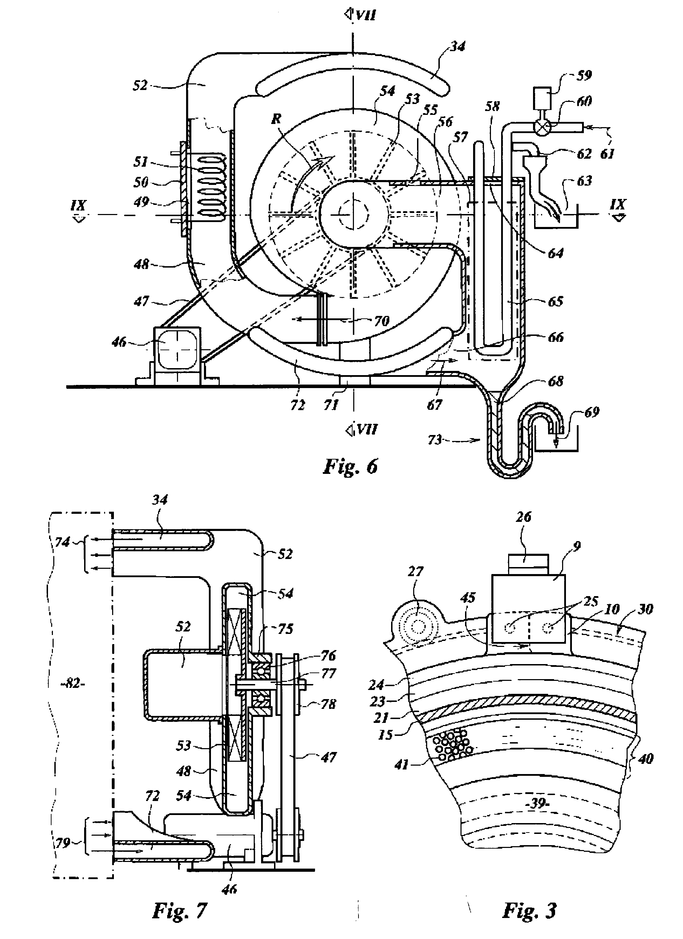

Figure 2 shows a section of the cylindrical drum 15 and how the cylindrical drum 15 is coupled to the mounting plate 17. An inner ring 33 of a bearing is fastened with fasteners 32 to the mounting plate 17, at the inner diameter of the inner ring 33 the mounting plate 17 has an opening 80 so that an air circulation system can connect to the heating cavern 82. The fasteners 32 also couple a back plate 40 to the inner diameter of the inner ring 33. The back plate 40 has at its upper ridge a mesh opening 41 to which an air supply nozzle 34 of the air circulation system is coupled and at its lower ridge a mesh opening to which an air exhaust nozzle 72 of the air circulation system is coupled (see figures 6 and 7).

At the inner diameter of the back plate 40, fasteners 35 and brackets 36 mount a reflector 37 and a transparent screen 39 to the side of the back plate 40 facing away from the heating cavern 82. In the room created by the reflector 37 and the transparent screen 39 an infrared radiator or heating lamp 38 is mounted in such a way that the direct and reflected infrared radiation of the radiator 38 illuminates the heating cavern 82 and cooks the food.

Bearing balls 31 couple an outer ring 24 of the bearing to the inner ring 33. In order to ease the mounting of the various parts to the inner ring 33 and/or the outer ring 24 the bearing is filled with bearing balls 31 after coupling the various parts to the inner ring 33 and outer ring 24. For this, the inner ring 33 or the outer ring 24 has a filling opening; a plug (not shown) closes this filling opening after assmebly. Between the stationary back plate 40 and the rotatable outer ring 24 is a gap 42. In order to prevent that food in the heating cavern 82 enters between the inner ring 33 and the outer ring 24 this gap 42 is provided with a seal (not shown).

The outer ring 24 has at its outer circumference gear teeth 30 that are in engagement with a pinion 27. The pinion 27 is mounted on a shaft 28 of a motor 29; the motor 29 is mounted with a bracket (not shown) on the mounting plate 17. A cover ring 11 is mounted on the back plate 17 and this cover ring 11 encloses and protects pinion 27 and the gear teeth 30. The cylindrical drum 15 is positioned inside a ridge on the surface of the outer ring 24 so that it keeps its circular shape. A ridge 23 on the outer ring 24 creates a slot 21 between the cylindrical drum 15 and this ridge 23, the lid 12 can slide in this ridge 21. The front plate 6 has at its outer circumference a strip 20, the strip 20 creates a slot 21 between the cylindrical drum 15 and this strip 20, the lid 12 can slide in this slot 21.

The bolt 22 is mounted in a hole in the outer ring 24 and has a bolt head 43 that is positioned between notches or a similar feature to prevent its rotation when the nut 16 is screwed on the bolt 22. Cover plates 44 are welded on the inside circumference of the cylindrical drum 15 and form a channel for the bolts 22 so that accumulating residues of food are avoided. In addition, the cover plates 44 interrupt the smooth surface of this inside circumference so that food starts rolling during rotation of the cylindrical drum 15.

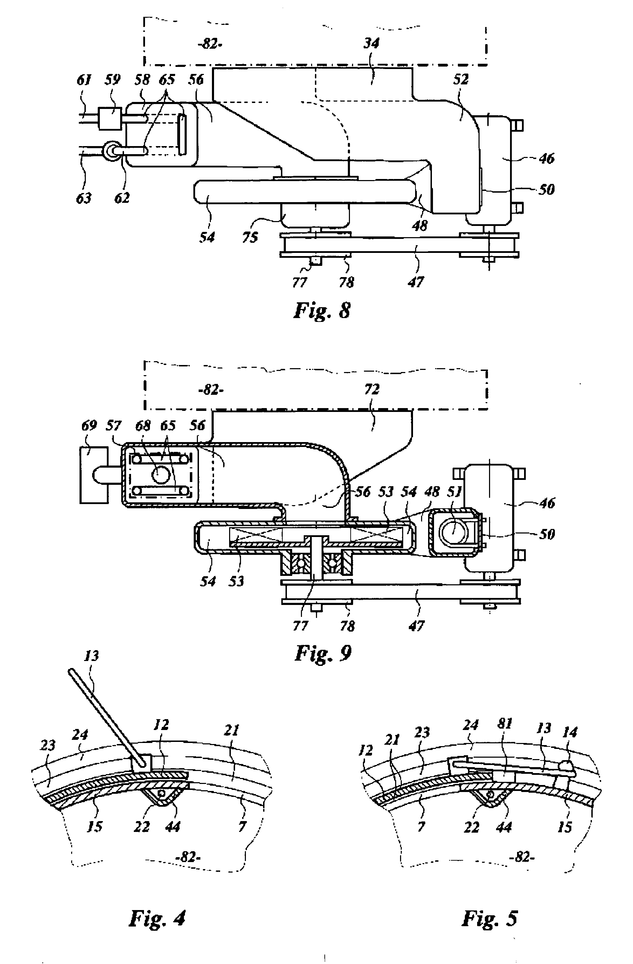

Figure 3 shows in front view a detail of the limit switch 9 and the cam 10 whereby the interrupted line 45 indicates a smaller dimension of the cam 10. There are two cams 10 and 10' on the circumference of the outer ring 24, one opposite the other. By giving these cams 10 different dimensions the detectors 25 can determine whether the opening 7 with lid 12 is above or under. Figures 4 and 5 show the lid 12 in respectively open and closed position. At respectively the open and the close position of the lid 12 the movement of the lid 12 is limited by a ridge 81 mounted on the outer circumference of the cylindrical drum 15.

Figures 6, 7, 8 and 9 show the air circulation system that is mounted against the back plate 40. The air circulation system circulates heated air through the heating cavern 82 in order to cook the food. Inlet air 74 blows out of the air supply nozzle 34 into the heating cavern 82 and exhaust air 79 is sucked out of the heating cavern 82 by the air exhaust nozzle 72. The air supply nozzle 34 is located above the infrared radiator 38 and is arc shaped. The air exhaust nozzle 72 is arc shaped and located under the infrared radiator 38. The air exhaust nozzle 72 sucks the air away near the food that rolls over the inner surface of the cylindrical drum 15. Because of these locations, the flow of heated air through the heating cavern 82 reaches the whole inside area so that the airflow is distributed evenly over all food.

The exhaust air 79 that leaves the heating cavern 82 flows in a flow direction 67 through an air exhaust channel 66 and a suction channel 56 towards a rotating fan 53. The fan 53 is mounted on a shaft 77 that rotates in a bearing 76. The bearing 76 is mounted in a fan housing 75 in which the fan 53 rotates in a direction R. A bracket 71 supports the housing 75. The rotating fan 53 forces the air from the suction channel 56 into a spiral casing 54 and from there in flow direction 70 into an expansion channel 48. From the expansion channel 48 the air flows through an air supply channel 52 and the air supply nozzle 34 into the heating cavern 82. A pulley 78 is mounted on the shaft 77 of the fan 53 and this pulley is driven via a belt 47 by a fan motor 46. As the volume of the circulating air changes during heating and cooling of the air, the suction channel 56 has an opening 55 for providing or expelling air.

In the disclosed embodiment the drum motor 29 and the fan motor 46 are separate motors. As in general the air circulation and the rotation of the heating cavern 82 occur simultaneously it is possible to use one motor for driving both the rotation of the heating cavern 82 and the rotation of the fan 53.

The infrared radiator 38 heats the food in the heating cavern 82 and heats also the circulating air in the heating cavern 82. For further heating the circulating air, the air supply channel 52 is provided with a heating element 51 that is fastened to a cover 50. The cover 50 can be mounted in an opening 49 in a wall of the air supply channel 52. During cooking the food in the heating cavern 82, the food releases vapour into the circulating air. For improving the crispness of the cooked food, the vapour in the circulating air can be partially removed. An air cooler 57 is placed in the air exhaust channel 66. By cooling the circulating air part of the vapour condensates on the air cooler 57 and drips as a condensate 68 in an air lock 73. After enough condensate 68 has assembled in the air lock 73 it flows away in a drain 69.

In the shown embodiment the air cooler 57 has a waterline 65 that is mounted in a cover 58. The waterline 65 extends in the circulating air. The waterline 65 is coupled to a water supply 61 via a valve 60. When an actuator 59 opens the valve 60 water flows through the waterline 65 to a water drainage 62 at the end of the waterline 65 and from the drainage 62 to a drain 63. The flowing water cools the waterline 65 so that vapour can condense on its surface and a condensate 68 drips to the bottom of the air exhaust channel and into the air lock 73.

As an alternative to the described embodiment, other coolers are possible. Instead of cooling with water, it is possible to cool by circulating ambient air. Thereby the ambient air can circulate, for instance using a fan, through pipes mounted in the air exhaust channel 66. In another embodiment, there are in the air exhaust channel 66 heat conducting ribs that extend through the wall to the outside of the air exhaust channel 66 and that are cooled with ambient air circulated by a fan. In another more simple embodiment, suitable in situations whereby the cooling capacity can be small in order to obtain the desired results or whereby the shape of the air exhaust channel is suitably adapted, it can be sufficient to arrange cooling of the outside surface of the air exhaust channel 66. This cooling can for instance take place by forced cooling with a fan or still more simple by heat induced circulation of ambient air.

As indicated earlier the cooking device 1 has a control system activated by the control panel 8 that controls the infrared radiator 38, the fan motor 46, the heating element 51, the actuator 59 and the drum motor 29. In addition to switching these parts of the cooking device 1 on or off, it is also possible to control the intensity of the heating or the speed of the motors. For obtaining the desired results the control system contains one or more cooking programs that can be chosen by the operator and that can be specific for certain products such as French fries, egg rolls, meat products, etc.. The programs can be designed such that specific durations intensities or speeds are specified and/or the air circulation system has at certain locations sensors that measure the temperature and/or humidity of the circulating air. Other sensors might be provided for controlling the functioning of the device, such as the earlier explained limit switch 9.

As an illustration of the use of the cooking device 1, a program for heating food is as follows. For specific results and types of food, the duration of the various steps can be changed.

First the heating cavern 82 is filled with the same quantity prepared food on both sides of the separation grid 4, in this example prepared French fries with a limited oil/fat content of less than 10-15%. The opening 7 is closed and the lid 12 is secured in closed position by hooking the resilient shackle 13 around pin 14.

The operator starts the heating program on the control panel 8. The heating program starts the drum motor 29 and the heating cavern 82 starts rotating whereby the French fries start rolling over the inner surface of the cylindrical drum 15 and the separation grid 4. The heating program also starts the fan motor 46 so that the air circulation starts. More or less simultaneously, the heating program switches the infrared radiator 38 and the heating element 51 on. This means that the cooking of the food starts, whereby the infrared radiation heats the food deeper below the surface and the heated air heats the surface of the food.

After approximately 90 seconds from the start, the heating program switches the air cooler 57 on by opening the valve 60 with the actuator 59. Now part of the humidity that the food releases during heating condensates against the waterline 65, assembles in the air lock 73 and eventually drains away.

After approximately 120 seconds from the start, the heating program switches the infrared radiator 38 off. The circulating air is now only heated by the heating element 51 and the food is no longer heated deeper below the surface. The humidity release from the inside of the food will end and the hot circulating air will dry the surface of the food, there giving it a tasty crust. The removal of the humidity by the air cooler 57 supports this effect.

After approximately 140 seconds from the start, the heating program switches the fan motor 46 and the heating element 51 off and closes the valve 60. After the program detects with the limit switch 9 one of the cams 10 that indicates that the opening 7 is at the bottom immediately above the worktable 2, the drum motor 29 is stopped. After placing the receptacle 3 under the opening 7 the operator can open the lid 12 and the cooked French fries will fall in the receptacle 3.

In the described heating program, the heating of the food takes place in two steps: the first step is heating by both infrared radiation and heated circulating air and the second step is only heating by heated circulating air. The skilled cook will provide further programs with different durations than specified the earlier described heating program and also programs with one or more intermediate steps whereby the intensity of the heating by infrared radiation and/or heating with heated air is changed.

Although it is not essential for using the cooking device 1 it is an important feature that it is easy to clean the device. The cooking device 1 can be used in a professional kitchen and the cleaning of the device is important. As discussed earlier, by unscrewing the nuts 16 the operator can remove the front plate 7, the separation grid 4, the lid 12 and the cylindrical drum 15 from the outer ring 24. These separate parts can now be cleaned and baked on food and grease can be removed. To ease this cleaning the surfaces can be prepared in a known way with a coating that prevents attachment of cooked and baked food. The operator can now clean the outer ring 24, the back plate 40 and the transparent screen 39. The operator can reassemble the above mentioned parts after cleaning.

In the described embodiment, there is a separate device for heating the circulating air and for generating infrared radiation. This makes it possible to maintain the circulation of heated air while the heating of the food with infrared radiation ends. A similar effect can be obtained with a device whereby the circulating air is heated by the infrared radiator. In that situation instead of switching off the infrared radiator, a shield in the form of a switchable shutter is placed between the heating cavern and the infrared radiator, so that the same result is obtained. The switchable shutter can formed of two circular discs that can rotate relative one another, whereby both discs are approximately for 50% open with holes. In a first position the openings in both discs are aligned so that the radiation can pass through the openings. In the second position, the openings in the one disc are closed by the second disc so that no radiation goes through the discs. The discs are moved relative one another from the first position and vice versa by an actuator.

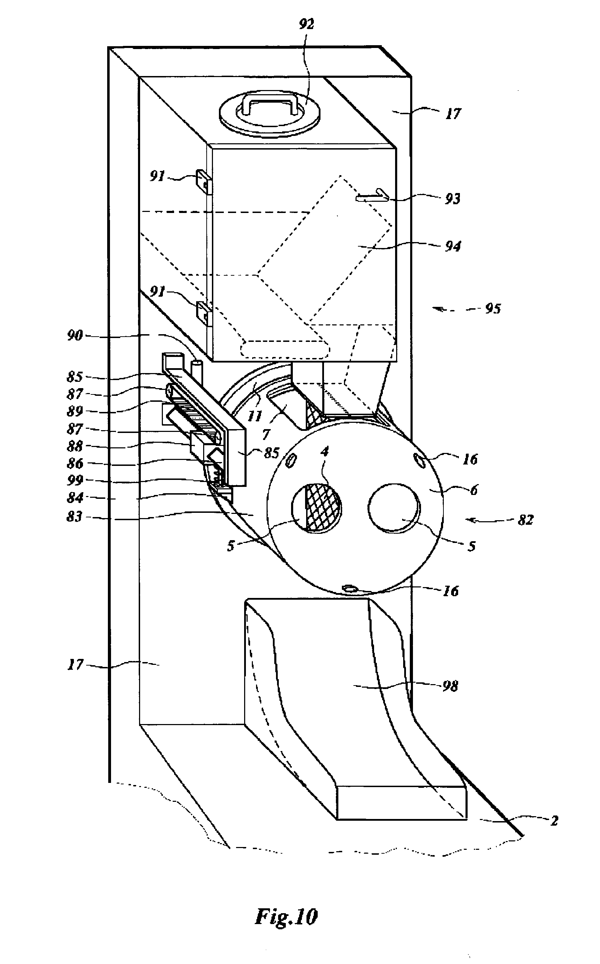

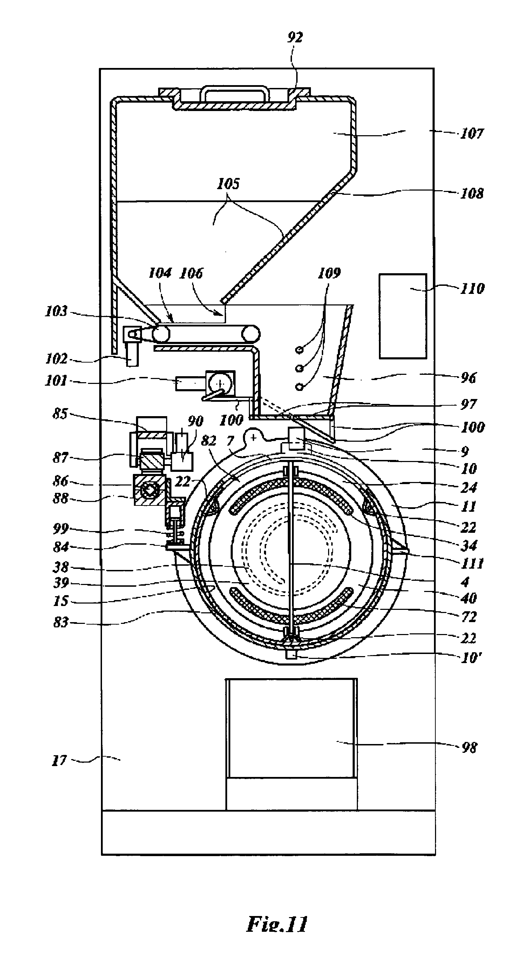

Figures 10 and 11 show an adapted heating cavern 82 combined with a storage bin 95 and further provisions that make it suitable for automatic cooking prepared food such as French fries. For this, the earlier described heating cavern 82 has automatic means for closing and opening the opening 7 and is therefore in this embodiment provided with a ring 83 that can rotate around the cylindrical drum 15 and that during heating rotates with the cylindrical drum 15. The cylindrical drum 15 has an opening 7, when this opening 7 is in its top position the heating cavern 82 can be filled from the storage bin 9 and when it is in its bottom position the heated French fries can fall in a tray 98. During heating this opening 7 is closed by the ring 83. The ring 83 has an opening similar to the opening 7. The ring 83 rotates with the cylindrical drum 15 and a shock absorber 99 can stop its rotation when a positioning drive 90 positions this shock absorber 99 in the path of a stop notch 84 or a stop notch 111. When the stop notch 84 stops the rotation of the ring 83, as shown in figures 10 and 11, the opening in the ring 83 is in its top position and when the stop notch 111 stops the rotation of the ring 83 the opening in the ring 83 is in its bottom position.

The shock absorber 99 is mounted on a slide 88 which can move over a square bar 86 in a direction perpendicular to the mounting plate 17. The slide 88 is coupled to a toothed belt 89 that is looped around wheels 87. The positioning drive 90 rotates the wheels 87. The positioning drive 90 can position the slide 88 at three distances from the mounting plate 17, for instance using sensors such as limit switches. In a first position, the shock absorber 99 is not in the path of one of the stop notches 84 and 111 so the ring 83 can rotate with the cylindrical drum 15. The stop notches 84 and 111 have different distances from the mounting plate 17 and the positioning drive 90 positions the shock absorber 99 in the path of one of these stop notches 84 or 111 when the opening of the ring 83 must stand still in the top position or the bottom position. After that the opening 7 of the cylindrical drum 15 is rotated to the top position or bottom position as well, using the cam 10 or 10' for detecting the rotative position of the cylindrical drum 15 and the heating cavern 82 is ready for filling or empties in the tray 98. For closing the opening 7 the shock absorber 99 will stop the rotation of the ring 83 while the cylindrical drum 15 is rotated over 180 degrees as detected by limit switch 9. After that, the positioning drive 90 moves the shock absorber 99 away from the paths of the stop notches 84 and 111 and the heating cavern 82 can be rotated and the cooking program can start in a similar way as discussed regarding the earlier described embodiments.

In the described embodiment, the ring 83 closes the opening 7 in the cylindrical drum 15 by rotating the ring 83 relative to the drum 15. It will be obvious for the skilled man that other means for automatically opening and closing the opening 7 are possible. The opening 7 can for instance be provided with a mechanism that is activated by a manipulator mounted on the mounting plate 17 which mechanism opens or closes a lid when the cylindrical drum 15 is in a specific rotative position.

For automatically filling the heating cavern 82 with a specific amount of prepared food such as pre-baked French fries there is a storage bin 95 above the opening 7. The storage bin 95 has a temperature-controlled compartment 107 with insulated walls 108 that is accessible for cleaning by opening a door 94. The door 94 is fastened with hinges 91 to the walls 108 and can be closed with a handle 93. At the top of the storage bin 95 there is a removable cover 92 for filling the temperature-controlled compartment 107 with prepared fries.

At the underside, the temperature-controlled compartment 107 has sloped sidewalls 105. The undersides of the sloped sidewalls 105 end immediately above an endless belt 104 that can transport the prepared fries in horizontal direction through an opening 106. The opening 106 is designed such that the prepared fries will move through the opening 106 only when the endless belt 104 is transporting them. The endless belt 104, made of an easy to clean material, is looped around two pulleys 103 and is driven by a dosing drive 102. The endless belt 104 transports the prepared food to an intermediate storage 96 that is closed at the bottom by two flaps 97. As long as the endless belt 104 runs the prepared fries accumulate in the intermediate storage 96 with a rising height. This height is measured with sensors 109. With a control panel 110 that is part of a control system the amount prepared fries to be heated in the heating cavern is preset. As soon as the sensors 109 and the control system determine that this pre-set amount is in the intermediate storage 96 the belt 104 stops.

After the heating cavern 82 is ready for receiving prepared fries and the opening 7 is under the intermediate storage 96 the control system opens the underside of the intermediate storage 96 by moving the flaps 97 via coupling rods 100 with a flap drive 101. After rotating the flaps 97 downwardly, the prepared food falls in the heating cavern 82.

The dosing of prepared fries according to the embodiment of figures 10 and 11 makes use of an intermediate storage 96. In another embodiment, there is no intermediate storage 96 and flaps 97 and the prepared food falls directly from the belt 104 into the heating cavern 82. The duration of this transport with the belt 104 into the heating cavern 82 and speed of the belt 104 determine the quantity of prepared food that is loaded in the heating cavern 82.

As indicated earlier the compartment 107 is temperature controlled. This is applicable for situations whereby this is a requirement for maintaining the quality of the prepared fries. It is clear that there are situations that do not require temperature control in the storage bin 95, for instance when the prepared food is sufficient cool or when the prepared food remains only for a short time in the storage bin 95.

The embodiment described in figures 10 and 11 can be combined with the heating cavern 82 as described in figures 1 - 9. However more simple designs are possible as well. In less exacting circumstances, it is for instance not necessary to stop the infrared radiation while the circulating air remains heated or to cool the circulating air, other simplifications are possible.

## Claims

1. Cooking device for prepared food comprising a heating cavern (82) with a closable opening (7) for filling and emptying the heating cavern, drive means (27,28,29) for rotating the heating cavern around an non-vertical axis, air circulation means (46,47,53) for circulating heated air through the heating cavern, an infrared radiator (38) for sending infrared radiation into the heating cavern and control means (8;110) for letting the cooking device follow a program to cook the food in the heating cavern **characterized in that** the cooking device has means for stopping or reducing infrared radiation into the heating cavern (82) while the heated air circulation continues.

2. Cooking device in accordance with claim 1 whereby the air circulation means (46,47,53) comprise a heater (51) and the control means (8;110) is designed to activate the infrared radiator (38) and the heater independently.

3. Cooking device in accordance with claim 1 whereby the circulating air is heated by the infrared radiator (38) and the cooking device comprises between the infrared radiator and the heating cavern (82) a shutter for preventing infrared radiation into the heating cavern.

4. Cooking device in accordance with claim 3 whereby the control means (8;111) is designed so that it can reduce the infrared radiation when it closes the shutter.

5. Cooking device in accordance with claim 1,2,3 or 4 whereby the air circulation means (46,47,53) comprise an air cooler (57).

6. Cooking device in accordance with claim 5 whereby the control means (8;111) can control the air cooler (57) independently from the infrared radiator (38) and/or the heater (51).

7. Cooking device in accordance with one of the previous claims whereby the circulating air enters or leaves the heating cavern (82) through an arc-shaped air nozzle (72) near the bottom of the heating cavern.

8. Device for automatically cooking prepared food such as French fries using a cooking device in accordance with one of the previous claims comprising a storage bin (95) located above the heating cavern (82) for storing prepared food, dosing means (96,97,104) for dosing a predetermined quantity prepared food into the heating cavern (82), means for automatically opening and closing the closable opening (7) for filling or emptying the heating cavern and a control system (111) for controlling the cooking and filling and emptying of the heating cavern.

9. Device for automatically cooking prepared food in accordance with claim 8 whereby the dosing means comprise a horizontal belt (102,103,104) for removing food out of the storage bin (95).

10. Device for automatically cooking prepared food according to claim 8 or 9 whereby the dosing means comprise an intermediate storage (96) with discharge flaps (97) at the bottom.

11. Device for automatically cooking prepared food according to claim 10 whereby the intermediate storage (96) comprises a sensor (109) for determining the quantity of food in the intermediate storage.

12. Device for automatically cooking prepared food according to one of the claims 8 - 11 whereby the means for automatically opening and closing the closable opening (7) comprise a ring (83) around the heating cavern (82) with a second opening of similar dimensions as the closable opening and means (84,99,111) for stopping the rotation of the ring when the heating cavern rotates.

13. Method for cooking food in a heating cavern (82) rotating around a non vertical axis whereby the rolling food is cooked by circulating heated air through the heating cavern and sending infrared radiation into the heating cavern **characterized in that** near the end of the cooking the heating with infrared radiation is stopped while the circulation of heated air and preferably the rolling of the food continues.

## Patentansprüche

1. Garvorrichtung für vorbereitete Nahrungsmittel, die eine Erwärmungskaverne (82) mit einer verschließbaren Öffnung (7) zum Befüllen und Entleeren der Erwärmungskaverne aufweist, Antriebsmittel (27, 28, 29) zum Drehen der Erwärmungskaverne um eine nicht-vertikale Achse, Luftumwälzungsmittel (46, 47, 53) zum Zirkulieren erwärmter Luft durch die Erwärmungskaverne, einen Infrarotstrahler (38) zum Aussenden von Infrarotstrahlung in die Erwärmungskaverne und Steuermittel (8; 110), um die Garvorrichtung einem Programm folgen zu lassen, um die Nahrungsmittel in der Erwärmungskaverne zu garen, **dadurch gekennzeichnet, dass** die Garvorrichtung Mittel zum Beenden oder Reduzieren der Infrarotstrahlung in die Erwärmungskaverne (82) aufweist, während die Umwälzung erwärmter Luft weitergeführt wird.

2. Garvorrichtung in Übereinstimmung mit Anspruch 1, wonach die Luftumwälzungsmittel (46, 47, 53) eine Heizung (51) aufweisen und das Steuermittel (8; 110) ausgebildet ist, den Infrarotstrahler (38) und die Heizung unabhängig voneinander zu aktivieren.

3. Garvorrichtung in Übereinstimmung mit Anspruch 1, wonach die zirkulierende Luft durch den Infrarotstrahler (38) erwärmt wird und die Garvorrichtung zwischen dem Infrarotstrahler und der Erwärmungskaverne (82) einen Verschluss aufweist, um Infrarotstrahlung in die Erwärmungskaverne zu verhindern.

4. Garvorrichtung in Übereinstimmung mit Anspruch 3, wonach das Steuermittel (8; 111) so ausgebildet ist, dass es die Infrarotstrahlung reduzieren kann, wenn es den Verschluss schließt.

5. Garvorrichtung in Übereinstimmung mit Anspruch 1, 2, 3 oder 4, wonach die Luftumwälzungsmittel (46, 47, 53) einen Luftkühler (57) aufweisen.

6. Garvorrichtung in Übereinstimmung mit Anspruch 5, wonach das Steuermittel (8; 111) den Luftkühler (57) unabhängig von dem Infrarotstrahler (38) und/oder der Heizung (51) steuern kann.

7. Garvorrichtung in Übereinstimmung mit einem der vorherigen Ansprüche, wonach die zirkulierende Luft durch eine bogenförmige Luftdüse (72) nahe dem Boden der Erwärmungskaverne in die Erwärmungskaverne (82) eintritt oder diese verlässt.

8. Vorrichtung zum automatischen Garen vorbereiteter Nahrungsmittel wie zum Beispiel Pommes frites unter Verwendung einer Garvorrichtung in Übereinstimmung mit einem der vorherigen Ansprüche, die einen oberhalb der Erwärmungskaverne (82) angeordneten Vorratsbehälter (95) zum Bevorraten vorbereiteter Nahrungsmittel aufweist, Dosiermittel (96, 97, 104) zum Dosieren einer vorgegebenen Menge vorbereiteter Nahrungsmittel in die Erwärmungskaverne (82), Mittel zum automatischen Öffnen und Schließen der verschließbaren Öffnung (7), um die Erwärmungskaverne zu befüllen oder zu entleeren, und ein Steuersystem (111) zum Steuern des Garens und des Befüllens und Entleerens der Erwärmungskaverne.

9. Vorrichtung zum automatischen Garen vorbereiteter Nahrungsmittel in Übereinstimmung mit Anspruch 8, wonach die Dosiermittel ein horizontales Transportband (102, 103, 104) zum Entnehmen von Nahrungsmitteln aus dem Vorratsbehälter (95) aufweisen.

10. Vorrichtung zum automatischen Garen vorbereiteter Nahrungsmittel gemäß Anspruch 8 oder 9, wonach die Dosiermittel ein Zwischendepot (96) mit Ablassklappen (97) am Boden aufweisen.

11. Vorrichtung zum automatischen Garen vorbereiteter Nahrungsmittel gemäß Anspruch 10, wonach das Zwischendepot (96) einen Sensor (109) zum Feststellen der Menge an Nahrungsmittel in dem Zwischendepot aufweist.

12. Vorrichtung zum automatischen Garen vorbereiteter Nahrungsmittel gemäß einem der Ansprüche 8 bis 11, wonach die Mittel zum automatischen Öffnen und Schließen der verschließbaren Öffnung (7) einen Ring (83) um die Erwärmungskaverne (82) mit einer zweiten Öffnung mit ähnlichen Abmessungen wie die verschließbare Öffnung aufweisen und Mittel (84, 99, 111) zum Anhalten der Drehung des Ringes wenn die Erwärmungskaverne rotiert.

13. Verfahren zum Garen von Nahrungsmittel in einer um eine nicht-vertikale Achse rotierenden Erwärmungskaverne (82), wonach das umherrollende Nahrungsmittel durch Umwälzen erwärmter Luft durch die Erwärmungskaverne und Senden von Infrarotstrahlung in die Erwärmungskaverne gegart wird, **dadurch gekennzeichnet, dass** nahe dem Ende des Garens das Erwärmen mit Infrarotstrahlung beendet wird während die Umwälzung von erwärmter Luft und vorzugsweise das Umherrollen der Nahrungsmittel weitergeführt wird.

## Revendications

1. Dispositif de cuisson pour de la nourriture préparée comprenant une caverne de chauffage (82) avec une ouverture (7) pouvant être fermée pour remplir et vider la caverne de chauffage, des moyens d'entraînement (27, 28, 29) pour faire tourner la caverne de chauffage autour d'un axe non vertical, des moyens de circulation d'air (46, 47, 53) pour faire circuler de l'air chauffé à travers la caverne de chauffage, un élément rayonnant infrarouge (38) pour envoyer un rayonnement infrarouge dans la caverne de chauffage et des moyens de commande (8 ; 110) pour laisser le dispositif de cuisson suivre un programme pour cuire la nourriture dans la caverne de chauffage, **caractérisé en ce que** le dispositif de cuisson comporte des moyens pour arrêter ou réduire le rayonnement infrarouge dans la caverne de chauffage (82) tandis que la circulation d'air chauffé se poursuit.

2. Dispositif de cuisson selon la revendication 1, dans lequel les moyens de circulation d'air (46, 47, 53) comprennent un dispositif de chauffage (51) et les moyens de commande (8 ; 110) sont conçus pour activer l'élément rayonnant infrarouge (38) et le dispositif de chauffage de manière indépendante.

3. Dispositif de cuisson selon la revendication 1, dans lequel l'air en circulation est chauffé par l'élément rayonnant infrarouge (38) et le dispositif de cuisson comprend, entre l'élément rayonnant infrarouge et la caverne de chauffage (82), un obturateur pour empêcher l'entrée du rayonnement infrarouge dans la caverne de chauffage.

4. Dispositif de cuisson selon la revendication 3, dans lequel les moyens de commande (8 ; 111) sont conçus de sorte qu'ils puissent réduire le rayonnement infrarouge lorsqu'ils ferment l'obturateur.

5. Dispositif de cuisson selon la revendication 1, 2, 3 ou 4, dans lequel les moyens de circulation d'air (46, 47, 53) comprennent un dispositif de refroidissement d'air (57).

6. Dispositif de cuisson selon la revendication 5, dans lequel les moyens de commande (8 ; 111) peuvent commander le dispositif de refroidissement d'air (57) indépendamment de l'élément rayonnant infrarouge (38) et/ou du dispositif de chauffage (51).

7. Dispositif de cuisson selon l'une des revendications précédentes, dans lequel l'air en circulation entre dans la caverne de chauffage (82) ou sort de celle-ci à travers une buse d'air (72) en forme d'arc à proximité du fond de la caverne de chauffage.

8. Dispositif pour cuire automatiquement de la nourriture préparée telle que des frites en utilisant un dispositif de cuisson selon l'une des revendications précédentes comprenant un coffre de stockage (95) situé au-dessus de la caverne de chauffage (82) pour stocker de la nourriture préparée, des moyens de dosage (96, 97, 104) pour doser une quantité prédéterminée de nourriture préparée dans la caverne de chauffage (82), des moyens pour ouvrir et fermer automatiquement l'ouverture (7) pouvant être fermée pour remplir ou vider la caverne de chauffage et un système de commande (111) pour commander la cuisson et le remplissage et le vidage de la caverne de chauffage.

9. Dispositif pour cuire automatiquement de la nourriture préparée selon la revendication 8, dans lequel les moyens de dosage comprennent une courroie horizontale (102, 103, 104) pour retirer la nourriture du coffre de stockage (95).

10. Dispositif pour cuire automatiquement de la nourriture préparée selon la revendication 8 ou 9, dans lequel les moyens de dosage comprennent un emplacement de stockage intermédiaire (96) avec des volets de déchargement (97) dans le fond.

11. Dispositif pour cuire automatiquement de la nourriture préparée selon la revendication 10, dans lequel l'emplacement de stockage intermédiaire (96) comprend un capteur (109) pour déterminer la quantité de nourriture dans l'emplacement de stockage intermédiaire.

12. Dispositif pour cuire automatiquement de la nourriture préparée selon l'une des revendications 8 à 11, dans lequel les moyens pour ouvrir et fermer automatiquement l'ouverture (7) pouvant être fermée comprennent un anneau (83) autour de la caverne de chauffage (82) avec une deuxième ouverture de dimensions similaires à celles de l'ouverture pouvant être fermée et des moyens (84, 99, 111) pour arrêter la rotation de l'anneau lorsque la caverne de chauffage tourne.

13. Procédé pour cuire de la nourriture dans une caverne de chauffage (82) tournant autour d'un axe non vertical, dans lequel la nourriture en rotation est cuite en faisant circuler de l'air chauffé à travers la caverne de chauffage et en envoyant un rayonnement infrarouge dans la caverne de chauffage, **caractérisé en ce que**, vers la fin de la cuisson, le chauffage par rayonnement infrarouge est arrêté tandis que la circulation d'air chauffé et de préférence la rotation de la nourriture se poursuivent.
